(19) Europäisches Patentamt
European Patent Office
Office européen des brevets

(11) EP 3 708 698 A1

(12) **EUROPÄISCHE PATENTANMELDUNG**

(43) Veröffentlichungstag:
**16.09.2020 Patentblatt 2020/38**

(21) Anmeldenummer: **19162515.1**

(22) Anmeldetag: **13.03.2019**

(51) Int Cl.:
*C25B 1/46* (2006.01) *C25B 15/08* (2006.01)
*C08G 64/24* (2006.01) *C08G 64/30* (2006.01)
*C01D 3/14* (2006.01) *B01D 61/02* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **SCHIESSER, Yuliya**
  **53844 Troisdorf (DE)**
- **WERNER, Knud**
  **47800 Krefeld (DE)**
- **BULAN, Andreas**
  **40764 Langenfeld (DE)**

(74) Vertreter: **Levpat**
**c/o Covestro AG**
**Gebäude 4825**
**51365 Leverkusen (DE)**

# (54) VERFAHREN ZUR AUFARBEITUNG UND WIEDERVERWENDUNG VON SALZHALTIGEM PROZESSWASSER

(57) Es wird ein integriertes Verfahren zur Aufbereitung von mindestens Katalysatorrest und/oder organische Verunreinigungen und Kochsalz enthaltendem Prozesswasser (1) aus der Produktion (I) von Polycarbonat und anschließende Verarbeitung des Prozesswassers (1) in einer nachgeschalteten Natriumchlorid-Elektrolyse (V) beschrieben.

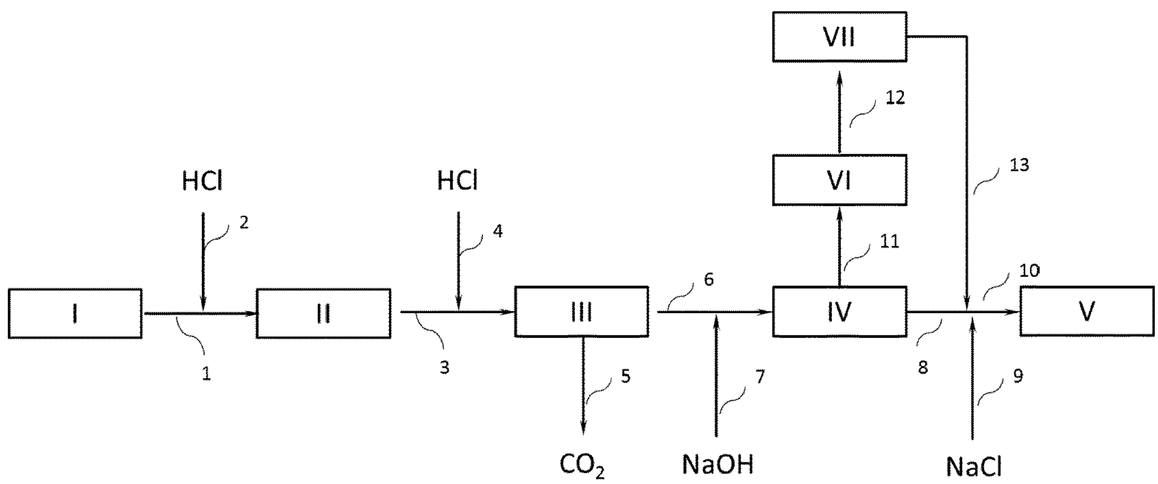


Fig. 1

EP 3 708 698 A1

## Beschreibung

Die Erfindung betrifft ein Verfahren zur Aufarbeitung von salzhaltigem Prozesswasser beispielsweise aus der Herstellung von Polycarbonat über das Lösungspolymerisationsverfahren (LPC) und Diphenylcarbonat (DPC) mit dem Ziel der Nutzung des Salzes in der Chlor Alkali (CA)-Elektrolyse.

Die Erfindung geht aus von an sich bekannten Verfahren zur Aufarbeitung von salzhaltigem Abwasser aus der Polycarbonat-Produktion mit dem Ziel den Rohstoff Natriumchlorid, der für die Chlorherstellung benötigt wird, möglichst sparsam einzusetzen und die problematische Abgabe von salzhaltigem Abwasser an die Umwelt, d.h. in Gewässer zu vermeiden.

Die Herstellung von Polycarbonat über das Lösungspolymerisationsverfahren (LPC) erfolgt üblicherweise durch ein kontinuierliches Verfahren, durch Herstellung von Phosgen und anschließende Reaktion von Bisphenolen und Phosgen in Gegenwart von Alkalihydroxid und einem Stickstoffkatalysator, Kettenabbrechern, und gegebenenfalls Verzweigern in einem Gemisch aus wässrig-alkalischer Phase und organischer Lösungsmittelphase in der Grenzfläche.

Die Herstellung von Diarylcarbonaten (DPC) erfolgt hingegen üblicherweise durch ein anderes kontinuierliches Verfahren, i. e. durch Herstellung von Phosgen und anschließende Reaktion von Monophenolen und Phosgen in einem inerten Lösungsmittel in Gegenwart von Alkalihydroxiden und einem basischen Stickstoffkatalysator in der Phasengrenzfläche zwischen organischer und wässriger Phase.

Als Katalysatoren kommen für die Reaktion im Prinzip alle für die Herstellung von Polycarbonaten nach dem Zweiphasengrenzflächenverfahren bekannten Katalysatoren, wie tertiäre Amine, N-Alkylpiperidine oder Pyridin im Frage. Der eingesetzte Amin-Katalysator kann offenkettig oder cyclisch sein, typisch sind Triethylamin und Ethylpiperidin.

Zumeist verwendbare inerte organische Lösungsmittel sind alle bekannten Lösungsmittel sowie deren Gemische, die in der Lage sind Polycarbonat bei einer Temperatur um 20°C zu mindestens 5 Gew.-% zu lösen. Typische Lösungsmittel sind Dichlormethan und Gemische aus Dichlormethan und Monochlorbenzol.

Während des Herstellprozesses kann es unter anderem zur Reaktion zwischen dem Lösemittel und Katalysatoren kommen, wobei durch die Bildung von Nebenprodukten Ammoniumsalze entstehen.

Nach der Reaktion wird in beiden Verfahren (LPC, DPC-Herstellung) die organische, das Polycarbonat enthaltene, Phase üblicherweise vom NaCl-haltigen Reaktionswasser abgetrennt, mit einer wässrigen Flüssigkeit (Waschwasser) gewaschen und nach jedem Waschvorgang von der wässrigen Phase soweit wie möglich getrennt. Das entstandene NaCl-haltige und mit organischen Nebenbestandteilen verunreinigte Reaktionswasser kann separat oder in der Mischung mit Waschwasser mit Wasserdampf gestrippt und grundsätzlich weiterverwendet werden. Die erhaltenen Prozesswässer werden nachstehend auch kurz als LPC- bzw. DPC-Prozesswasser bezeichnet. Das oben gezeigte Vorgehen ist beispielsweise in der EP 2 229 343 A1 beschrieben.

Die wässrigen Phasen (LPC- bzw. DPC-Prozesswasser) mit einem Natriumchlorid-Gehalt von typischerweise etwa 5 bis 20 Gew.- % (Prozesswasser) könnten in der Chlor-Alkali-Elektrolyse (nachstehend auch kurz CA-Elektrolyse) zur Herstellung von Chlor und Natriumhydroxid grundsätzlich weiterverwendet werden.

Für den Einsatz dieser Prozesswässer in der CA-Elektrolyse ist es jedoch erforderlich, bestimmte Grenzwerte an organischen und anorganischen Verunreinigungen einzuhalten, um eine Schädigung von Membranen und/oder Elektroden der Elektrolyseure durch Ablagerungen oder chemische Prozesse zu verhindern.

Bei den möglichen Hauptverunreinigungen des Prozesswassers aus der Polycarbonatproduktion handelt es sich typischerweise um Phenol, Bisphenol A, Phenol- und Benzolderivate mit unterschiedlichen Alkyl-Substitutionen sowie halogenierte Aromaten (bspw. Butylphenol, Isopropylphenol, Trichlorophenol, Dibromophenol etc.) sowie um polare, aliphatische Amine und deren Salze (Trimethylamine, Butylamine, Dimethylbenzylamine) sowie Ammoniumverbindungen und deren Salze. Die Prozesswässer aus Diphenylcarbonat (DPC)- und Polycarbonat-Herstellung nach dem Phasengrenzflächenverfahren (kurz LPC-Produktion genannt) weisen herstellungsbedingt üblicherweise einen pH-Wert im Bereich von 12 bis 14 auf, und haben eine typische Konzentration von Natriumchlorid im Bereich von 5 bis 7 Gew.-% (im Falle des LPC-Verfahrens) und von 14 bis 17 Gew.-% (im Falle des DPC-Verfahrens). Des Weiteren können die Prozesswässer Carbonate mit einer Konzentration bis zu 10 g/L beinhalten.

Phenol und seine Derivate, Bisphenol A und weitere hochmolekulare organische Verbindungen werden in der Chlor-Alkali-Elektrolyse chloriert und bilden AOX (adsorbable organic halogen compounds, adsorbierbare organische Halogenverbindungen). Tertiäre, Ammoniumverbindungen und deren Salze sowie alle Amine führen zur Bildung von $NCl_3$ einem hochbrisanten Gefahrstoff, sowie zu einem Anstieg der Zellspannung in der Chlor-Alkali-Elektrolyse und damit zu erhöhtem Energieverbrauch. Des Weiteren führen die Oxidationsprodukte dieser organischen Verunreinigungen ebenfalls zu einem Spannungsanstieg in der CA-Elektrolyse. All diese Verunreinigungen sollten aus dem jeweiligen Prozesswasser möglichst weitgehend entfernt werden um das Prozesswasser für die Elektrolyse wirtschaftlich nutzen zu können.

Anorganische Verunreinigungen in den Prozesswässern (Ca, Mg, Si, Mn, Ni, etc) führen zur Erhöhung der elektrischen Spannung in der CA-Elektrolyse und sollten ebenfalls möglichst weitgehend entfernt werden.

Besondere Aufgabe der Erfindung ist es den Anteil der vorgenannten Verunreinigungen, insbesondere der

Ammoniumverbindungen und deren Salze, auf einen vorbestimmten Grenzwert reduziert werden, um die Prozesswässer sicher in der Chloralkali-Elektrolyse einsetzen zu können.

Aus dem Stand der Technik sind verschiedene Maßnahmen zur Aufbereitung salzhaltiger Prozesswässer aus der Herstellung von Polycarbonat bekannt und in mehreren Veröffentlichungen beschrieben worden.

Die WO 2017/001513 A1 und WO2015168339A1 beschreibt ein Verfahren zur Reinigung und Konzentrierung von Prozesswasser, in dem das Prozesswasser nach entsprechender Reinigung, u.a. Feinreinigung über Aktivkohle, und anschließender Konzentration mittels osmotischer Destillation der Nutzung in der CA-Elektrolyse zugeführt werden soll. Bei eigenen Versuchen wurde jedoch beobachtet, dass die erwähnten Verunreinigungen nicht oder nicht vollständig durch die Aktivkohle aus dem Prozesswasser entfernt werden. Insbesondere Ammoniumverbindungen und deren Salze zeichnen sich durch schlechte Adsorbierbarkeit an der Aktivkohle aus.

Die Patentschrift US6214235B1 beschreibt einen Prozess zur Entfernung von Ammoniumsalzen aus Kochsalzlösungen mittels Adsorbenzien (Aktivkohle, Ionentauscher, karbonisierte Ionentauscher). Ein verfrühter Durchbruch von Ammoniumsalzen durch das Aktivkohlebett im Falle einer erhöhten Feedbeladung und somit das Gelangen der verunreinigten Lösung in die Chlor-Alkali-Elektrolyse kann bei Anwendung dieses bekannten Reinigungsprozesses ebenfalls nicht ausgeschlossen werden.

Die Patentschrift US6340736B1 beschreibt ein Verfahren zur Reinigung und Konzentrierung von Prozesswasser, in dem die Aufreinigung durch katalytische Oxidation erfolgt, wobei anschließend eine Eindampfung zur Erhöhung der Kochsalzkonzentration folgt. Die bei der Oxidation gebildeten Oxidationsprodukte werden jedoch ebenfalls im Prozesswasser konzentriert (speziell im Anolytkreislauf der CA-Elektrolyse) und führen in der Folge bei Einsatz als Sole in der CA-Elektrolyse zum unerwünschten Spannungsanstieg. Ein Spannungsanstieg in der Elektrolyse bedeutet, dass der Energieverbrauch für die Elektrolyse insgesamt ansteigt und damit die Chlor- und Natronlaugeproduktion nicht nur unwirtschaftlicher macht sondern auch durch eine Erhöhung des Primärenergieverbrauchs eine zu vermeidende Umweltbelastung ($CO_2$ Emissionsproblematik) darstellt.

Die Offenlegungsschrift DE102007004164A1 beschreibt ein Verfahren zur Eliminierung von stickstoffhaltigen organischen Verbindungen aus salzhaltigem Wasser mittels Oxidation mit anschließender Adsorption. Das beschriebene Verfahren ist nur für ein Wasser mit einer Konzentration von stickstoffhaltigen organischen Verbindungen von mehr als 50 ppm gedacht und geeignet.

Ausgehend vom geschilderten Stand der Technik besteht die Aufgabe darin, ein integriertes Verfahren zur Aufbereitung von salzhaltigem Prozesswasser aus der Polycarbonatherstellung bereitzustellen, bei dem das salzhaltige Prozesswasser aus der Polycarbonatherstellung so gereinigt wird, dass es sicher und problemlos in einer Chlor-Alkali-Elektrolyse zur Herstellung von Chlor und Natronlauge weiterverwendet werden kann ohne die zuvor beschriebenen technischen Nachteile für die Elektrolyse in Kauf zu nehmen. Insbesondere soll das Prozesswasser aufbereitet werden, sodass es nahezu frei von Ammoniumverbindungen und deren Salzen ist bevor es als Elektrolysesole verwendet wird.

Es wurde überraschenderweise gefunden, dass eine zusätzliche membranbasierte Reinigungsstufe (Nanofiltration) dazu führt, dass das vorbehandelte Prozesswasser weitgehend von Ammoniumverbindungen und deren Salzen befreit wird und der CA-Elektrolyse zugeführt werden kann. Zusätzlich wird das Prozesswasser von mehrwertigen anorganischen Ionen befreit.

Gegenstand der Erfindung ist ein integriertes Verfahren zur Aufbereitung von mindestens Katalysatorrest und/oder organische Verunreinigungen und Kochsalz enthaltendem Prozesswasser aus der Produktion von Polycarbonat, insbesondere von Diarylcarbonaten oder von Polycarbonat nach dem Lösungspolymerisationsverfahren und anschließende Verarbeitung des Prozesswassers in einer nachgeschalteten Natriumchlorid-Elektrolyse, umfassend wenigstens die folgenden Schritte:

a) Herstellung von Phosgen durch Umsetzung von Chlor mit Kohlenmonoxid,
anschließend entweder

b1) Umsetzung des gemäß Schritt a) gebildeten Phosgens mit wenigstens einem Bisphenol in Gegenwart von Natronlauge und ggf. Katalysator zu einem Polycarbonat und einer Natriumchlorid-haltigen wässrigen Lösung, oder

b2) Umesterung eines oder mehrerer Bisphenole mit einem oder mehreren Diarylcarbonaten zum Oligo- / Polycarbonat und dem Monophenol,
Isolierung bzw. Trennung des Polycarbonats und des Monophenols,
Umsetzung des Monophenols in Anwesenheit von Natronlauge und von Katalysator mit Phosgen und Trennung der Produkte wässrige Natriumchlorid-Lösung, Polycarbonat und Diarylcarbonat, wobei das Diarylcarbonat bevorzugt in der anfänglichen Umesterung wiedereingesetzt wird,

c) Abtrennung der in Schritt b1) oder b2) erhaltenen wässrigen Natriumchlorid-haltigen Lösung (Prozesswasser)

von Lösungsmittelresten und/oder ggf. Katalysatorresten, insbesondere durch Strippen der Lösung mit Wasserdampf, dann Einstellen der vorgereinigten Lösung auf einen pH-Wert kleiner oder gleich 8 und anschließende Reinigung der vorgereinigten NaCl-Lösung mit Adsorbenzien, insbesondere mit Aktivkohle,

d) Elektrochemische Oxidation wenigstens eines Teils der Natriumchlorid-haltigen Lösung erhalten aus Schritt c) unter Bildung von Chlor, Natronlauge und ggf. Wasserstoff,

e) wobei wenigstens ein Teil des gemäß Schritt d) hergestellten Chlors in die Herstellung von Phosgen gemäß Schritt a) zurückgeführt wird und/oder

f) optional wenigstens ein Teil der gemäß Schritt d) hergestellten Alkalilauge in die Herstellung von Polycarbonat gemäß Schritt b1) zurückgeführt wird,

dadurch gekennzeichnet, dass im Anschluss an die Reinigung der Natriumchlorid-haltigen Lösung mit Adsorbenzien in Schritt c) die gereinigte NaCl-haltige Lösung in einem zusätzlichen Schritt c1) einer Nanofiltration unterzogen wird, wobei die NaCl-haltige Lösung in eine hochgereinigte NaCl-Lösung als Permeat und ein NaCl-haltiges Konzentrat mit organischen und anorganischen Verunreinigungen aufgetrennt wird, die hochgereinigte NaCl-Lösung der elektrochemischen Oxidation d) zugeführt und das Konzentrat wahlweise aufgearbeitet oder verworfen wird.

Das Ziel der Vorreinigung gemäß Schritt c) und insbesondere Schritt c1) im neuen Verfahren ist das Recycling von salzhaltigem Prozesswasser, um eine sichere und problemlose Nutzung des Prozesswassers in der Elektrolyse zur Herstellung von Chlor zu gewährleisten. Die Prozesswässer beinhalten, wie oben im Einzelnen beschrieben, organische und anorganische Verunreinigungen und/oder Katalysatorreste, insbesondere von Stickstoffkatalysatoren bzw. basischen Stickstoffkatalysatoren, welche entfernt werden sollen. Durch die Kreislaufführung der Sole in der CA-Elektrolyse würde es ansonsten zu einer Akkumulation der Verunreinigungen kommen und damit zur Herabsetzung der Produktqualität und sogar zu Schäden in den Produktionsanlagen.

Die Nanofiltration für die Entfernung von organischen Verunreinigungen aus den Prozesswässern aus der Polycarbonatherstellung würde als alleiniger Verfahrensschritt nicht ausreichen bzw. wird durch begleitende Effekte, wie Membranfouling und Verblockung der Membran, behindert. Eigene Untersuchungen haben gezeigt, dass nur 50% bis 60 % des gesamten TOC-Wertes (Total Organic Carbon) durch bloße Anwendung einer Nanofiltrationsmembran zurückgehalten werden konnten (siehe Beispiel 4). Aus der Literatur ist grundsätzlich bekannt, dass organische Verunreinigungen, unter anderem Phenol, Phenolderivate und Bisphenol A, aufgrund der adsorptiven Wechselwirkungen mit dem Membranmaterial zu Fouling und Verblockung der Membranen führen können, was die Anwendung von Filtermembranen grundsätzlich erschwert. (Separation and Purification Technology 63 (2008) 251-263; Water Research Volume 40, Issue 20, December 2006, Pages 3793-3799). Dies bestätigen auch eigene Untersuchungen mit dotierten Lösungen wie im nachstehenden Beispiel 2 beschrieben.

Organische Ammoniumverbindungen und deren Ammoniumsalze, beispielweise N-Ethylpiperidin und dessen Reaktionsprodukt mit Dichlormethan, zeichnen sich durch schlechte Adsorbierbarkeit an Aktivkohle aus. Um diese Verbindungen mit Aktivkohle aus dem Prozesswasser möglichst quantitativ zu entfernen, ist eine große Menge an Aktivkohle als Adsorber notwendig, welcher auch sehr oft ausgetauscht werden muss.

Um den bekannten Reinigungsprozess mit Aktivkohle dennoch sicher zu betreiben, wird die Aktivkohlekapazität sicherheitshalber nur bis zu 50-75 % genutzt. Anderenfalls wäre eine aufwändige Kontrollanalytik notwendig, um garantieren zu können, dass kein verfrühter Durchbruch der organischen Verunreinigungen, insbesondere organische Ammoniumverbindungen und deren Ammoniumsalze, durch die Aktivkohlen erfolgt und in die Chlor-Alkali-Elektrolyse gelangt.

Mit dem erfindungsgemäßen Verfahren bestehend aus einer Vorreinigung mit dem Ziel der Entfernung der leicht adsorbierbaren organischen Verunreinigungen aus den Prozesswässern der Polycarbonatproduktion sowie der Nachreinigung mittels Nanofiltration mit dem Ziel der Entfernung von persistenten Verbindungen wie den genannten Ammoniumverbindungen (Katalysatorreste) und deren Ammoniumsalze wird die oben beschriebene technische Aufgabe gelöst.

Die Vorreinigung ist hilfreich, um z.B. Phenole (z.B. unsubstituiertes Phenol, Alkylphenole) und weitere adsorbierbare aromatische Verbindungen (z. B. Bisphenol A) aus dem Prozesswasser zu entfernen, da diese zum einen von der Nanofiltration nicht abgetrennt werden können und zum Anderen zur Verblockung der Nanofiltrationsmembranen führen können.

Die Entfernung der leicht adsorbierbaren Verunreinigungen kann auf unterschiedliche Art und Weise und an verschiedenen Stellen im Prozess erfolgen. Bevorzugt soll die Vorreinigung von DPC und LPC Prozesswasser durch Behandlung mit Aktivkohle bei einem pH-Wert gleich oder kleiner 8 erfolgen. Da diese sich als überraschend besonders geeignet erwiesen haben, werden besonders bevorzugt Aktivkohlen auf der Basis von, insbesondere pyrolysierten, Kokosnussschalen verwendet, insbesondere solche welche zusätzlich eine saure und anschließend eine alkalische

Wäsche zur Entfernung anorganischer Bestandteile aus der Aktivkohle erfahren haben. Auf Kokosnussschalen basierte Aktivkohle zeichnet sich besonders durch ihre feinen Poren (im Mikrometerbereich) und eine hohe Härte und dadurch merklich weniger Kohleabrieb aus. Die saure und alkalische Wäsche führt zusätzlich dazu, dass die Auswaschung von Mineralbestandteilen aus der Aktivkohle während des Vorreinigungsschrittes c) für Prozesswasser minimiert wird. Alternativ können andere Adsorbenzien (Zeolithe, makro- und mesoporöse künstliche Harze, Zeolithe etc.) zur Vorreinigung verwendet werden. In der Vorreinigung c) sollte die gesamte Konzentration von Phenol, Phenolderivaten und Bisphenol A besonders bevorzugt auf den Wert von höchstens 2 mg/L gesenkt werden.

In einer bevorzugten Ausführung des neuen Verfahrens wird die Natriumchlorid-haltige Lösung bei der Reinigung c) vor der Adsorption auf einen pH-Wert von höchstens 7 eingestellt, insbesondere durch Einsatz von Salzsäure oder Chlorwasserstoff.

Als Nanofiltrationsmembranen (NF-Membranen) können generell symmetrische oder asymmetrische Membranen verwendet werden. Bevorzugt werden asymmetrische Kompositmembranen, bestehend aus mehreren Schichten (bis zu 4) mit unterschiedlichen Parametern (Polymerart, Schichtdicke, Porosität, Vernetzungsgrad des Polymers etc.), verwendet. Die trennaktive Schicht der NF-Membran kann ebenfalls aus verschiedenen Polymeren gefertigt sein, wobei viele kommerziell verfügbaren NF-Membranen eine Trennschicht auf Basis von Piperazinamid aufweisen. Entscheidend für die Trennaufgabe ist die Trenngrenze der aktiven Schicht der Membran (MWCO Molecular Weight Cut Off). Bevorzugt wird eine NF Membran mit einer Trenngrenze (MWCO) von 150 bis 300 Da, besonders bevorzugt 180 bis 220 Da bei der Nanofiltration verwendet.

Es können grundsätzlich NF-Membranen verschiedener Geometrie verwendet werden (Flachmembranen, Hohlfaser, Rohrmembranen). Bevorzugt werden Flachmembranen verwendet, welche in Form von Spiral-Wickel-Modulen kommerziell verfügbar sind.

Die Nanofiltration ist ein an sich bekanntes druckgetriebenes Membranverfahren zur Aufbereitung von unterschiedliche Salze enthaltenden wässriger Lösungen. Eine Besonderheit der Nanofiltrationsmembranen ist ihre Ionenselektivität: Salze mit einwertigen Anionen können die Membran in hohem Maße (abhängig von der Membran) passieren, während Salze mit mehrwertigen Anionen (z.B. Sulfate und Carbonate) zum größten Teil zurückgehalten werden. Diese Ionenselektivität der Nanofiltration basiert auf negativen Ladungsgruppen auf bzw. in der Membran, die über elektrostatische Wechselwirkungen mehrwertige Anionen an der Permeation hindern. Im Hinblick auf die Abtrennung organischer Komponenten aus wässrigen Lösungen werden von Nanofiltrationsmembranen nennenswerte Rückhaltevermögen erst oberhalb einer Molmasse von M = 200 kg/kmol erzielt. (siehe z.B. Membrane Processes, R. Rautenbach et al., 1989, John Wiley & Sons Ltd.).

Die Abtrennung von mehrwertigen anorganischen Verunreinigungen aus Kochsalzlösung für den Einsatz in der Chlor-Alkali-Elektrolyse ist bekannt. Dies kann direkt mittels Verwendung von Nanofiltrationsmembranen (WO2014008593) erfolgen oder, wie in EP1858806B1beschrieben, zunächst mittels Zugabe von Retention-verstärkenden Komponenten und anschließender Nanofiltration durchgeführt werden.

Die Nanofiltration c1) wird in einer bevorzugten Ausführung des neuen Verfahrens bei einer Temperatur von 10°C bis 45°C, bevorzugt von 20°C bis 45°C, besonders bevorzugt von 20°C bis 35°C durchgeführt.

Der Betriebsdruck auf dem Feed vorder Nanofiltration c1) beträgt typischerweise bevorzugt 5 bar bis 50 bar, besonders bevorzugt von 15 bis 45 bar.

Gemäß einer bevorzugten Ausführung der Erfindung können mittels der Nanofiltration c1) vorgereinigte NaCl-haltige Wässer behandelt werden, welche eine NaCl-Konzentration im Bereich von 4 Gew.-% bis 20 Gew.-% aufweisen, bevorzugt eine NaCl-Konzentration von 7 und 20 Gew.-%.

Ein Maß für die Trennschärfe einer Membran ist das Rückhaltevermögen bzw. der Rückhalt Ri bezüglich einer Komponente i welcher, abhängig von den Konzentrationen in Feed und Permeat, folgendermaßen definiert wird:

$$R_i = \left(1 - \frac{y_i}{x_i}\right) \cdot 100\%$$

hierbei sind:

Ri Rückhaltevermögen

$y_i$ Stoffmengenanteil der Komponente i im Permeat

$x_j$ Stoffmengenanteil der Komponente i im Feed

Gemäß einer bevorzugten Ausführung der Erfindung beträgt der Rückhalt der Nanofiltration-Membran die für NaCl höchstens 10%, besonders bevorzugt höchstens 5%. Ein höherer Rückhalt kann einen höheren Betriebsdruck

erfordern und ist aus energetischer Sicht nachteilig.

In einer weiteren bevorzugten Ausführung der Erfindung wird die Nanofiltration c1) so betrieben, dass bei der Nanofiltration c1) mindestens 50 Gew.-%, bevorzugt mindestens 70 Gew.-% des in der vorgereinigten NaCl-Lösung vor der Nanofiltration c1) enthaltenden Natriumchlorids (100 Gew.-%) im Permeat erhalten werden.

Gemäß einer besonderen Ausführung der Erfindung soll der Rückhalt der Nanofiltration-Membran für Ammoniumverbindungen und deren Salze unabhängig von einander jeweils mehr als 90% betragen.

Gemäß einer weiteren besonderen Ausführung der Erfindung soll der Permeatfluss durch die Membran bei der Nanofiltration von 15 bis 40 $L/(hm^2)$ betragen.

Der pH Wert des Prozesswassers für die Behandlung mit Nanofiltration kann typischerweise zwischen 2 und 10 variieren und abhängig von weiteren Prozessschritten gewählt werden. Besonders bevorzugt wird im neuen Verfahren der pHWert des Prozesswassers bei der Nanofiltration auf 3 bis 8 eingestellt.

Das entstehende Permeat, das im wesentlichen frei von Ammoniumverbindungen und deren Salze ist, wird durch die Zugabe vom festem Salz aufkonzentriert und dem CA-Elektrolyse-Solekreislauf zugeführt. Optional kann die Aufkonzentrierung mittels Aufkonzentrationsverfahren wie Eindampfung, Hochdruckumkehrosmose, Membrandestillation, osmotischer Destillation etc. erfolgen. Das entstehende NF-Konzentrat kann entweder verworfen werden, oder optional mittels adsorptiven Verfahren (Aktivkohle, Ionentauscher) von Ammoniumverbindungen und deren Salzen sowie weiteren mehrwertigen Ionen in konzentrierter Form befreit werden und ebenfalls aufkonzentriert und dem CA-Elektrolyse-Solekreislauf zugeführt werden.

Etwaige Anteile an Alkalicarbonat in der Kochsalzlösung werden bevorzugt durch Einstellen auf einen pH von maximal 4 und anschließende Entfernung mittels Strippgas bevorzugt mittels Inertgas oder Luft entfernt. Ziel ist ein restlicher Gehalt bevorzugt von maximal 50 mg/L Alkalicarbonat. Die optionale Entfernung von Carbonaten durch Strippung mit Strippgas bei einem pH im Bereich von maximal 4 kann sowohl vor als auch nach dem Nanofiltrationsschritt, bevorzugt vor dem Nanofiltrationsschritt erfolgen.

Der Vorteil des Einsatzes der Nanofiltrationsmembran nach dem Vorreinigungsschritt mit der Aktivkohle liegt außerdem darin, dass alle mehrwertige Ionen, welche aus der Aktivkohle mit dem Prozesswasser ausgespült werden, ebenfalls entfernt werden. Dadurch kann auf die aufwändige Vorbereitung der Aktivkohle durch saure und alkalische Wäsche verzichtet werden.

Bevorzugt wird wenigstens ein Teil der hochgereinigten Natriumchlorid-haltigen Lösung aus Schritt c1) in den Solekreislauf einer Membranelektrolyse zur Herstellung von Chlor, Natronlauge und ggf. Wasserstoff gegeben. Es wird besonders bevorzugt eine gemischte Sole für die Membranelektrolyse hergestellt, die einen Maximalgehalt an BPA von 2 mg/L aufweist. Der TOC Gehalt der Sole sollte insbesondere bevorzugt max. 5 mg/L betragen.

Eine besonders bevorzugte Ausführung des neuen Verfahrens ist dadurch gekennzeichnet, dass die elektrochemische Oxidation d) wenigstens eines Teiles der aus der Nanofiltration c1) erhaltenen hochgereinigten Natriumchlorid-haltigen Lösung zu Chlor und Natronlauge in einer Membranelektrolyse unter Einsatz einer Sauerstoffverzehrelektrode als Kathode erfolgt.

In einer bevorzugten Variante des neuen Verfahrens kann es erforderlich sein, dass der hochgereinigten Natriumchlorid-haltigen Lösung aus Schritt c1) vor der Elektrolyse d) zusätzliches Natriumchlorid zur Erhöhung der Natriumchlorid-Konzentration zugegeben wird oder die Konzentration wie oben beschrieben erhöht wird.

Bevorzugt ist daher auch eine Ausführungsform des neuen Verfahrens, die dadurch gekennzeichnet ist, dass die hochgereinigte Natriumchlorid-haltige Lösung erhalten aus Schritt c1) vor der Elektrolyse d), insbesondere einer Elektrolyse mittels Membran-Elektrolyseverfahren, auf eine NaCl-Konzentration von mindestens 23 Gew.-%, bevorzugt mindestens 25 Gew.-% gebracht wird.

Eine weitere bevorzugte Variante des neuen Verfahrens ist dadurch gekennzeichnet, dass das bei der Nanofiltration c1) erhaltene Konzentrat, das Natriumchlorid Lösung und Katalysatorreste enthält einer Aufarbeitung g) zugeführt wird, in der an einem Kationenaustauscherharz ionische und nichtionische Katalysatorreste von der konzentrierten Natriumchloridlösung abgetrennt werden. Bevorzugt werden die am Kationenaustauscherharz adsorbierten Katalysatorreste mittels organischer Lösemittel (z.B. Methanol) bei einem pH Wert kleiner 3 eluiert. Unabhängig davon kann in der Aufarbeitung g) das bei der Nanofiltration c1) erhaltene Konzentrat auch durch Aktivkohlebehandlung gereinigt werden. Dafür eignet sich ebenfalls Aktivkohle auf der Kokosnussschalenbasis wie oben beschrieben, insbesondere eine solche welche zusätzlich eine saure und alkalische Wäsche zur Entfernung anorganischer Bestandteile aus der Aktivkohle erfahren hat.

In einer besonders bevorzugten Ausführung der vorgenannten Variante des neuen Verfahrens wird die in Schritt g) erhaltene gereinigte konzentrierte Natriumchloridlösung zusätzlich in der elektrochemischen Oxidation d) umgesetzt.

In einer alternativen bevorzugten Ausführung des neuen Verfahrens in Fällen in denen die Elektrolyse mit geringerer NaCl Konzentration betrieben werden kann, wird die Natriumchlorid-Konzentration, der in die Elektrolyse d) gelangenden Natriumchlorid-Lösung auf einen Wert von 100 bis 320 g/l, bevorzugt 100 bis 280 g/l eingestellt.

Die Konzentration der Natronlauge, die aus der Elektrolyse erhalten wird, beträgt dann typischerweise 10 bis

33 Gew.-%, bevorzugt 12 bis 32 Gew.-%. Die so erzielte niedrigere Natronlaugenkonzentration kann für die direkte Anwendung in ausgewählten chemischen Prozessen von Vorteil sein. In der Regel wird aber die oben zuvor genannte Mindestkonzentration angestrebt.

In der Elektrolyse gemäß Schritt d) werden im Falle der Anwendung einer Membranelektrolyse bevorzugt Ionenaustauschermembranen bei der Elektrolyse d) eingesetzt, deren Wassertransport je mol Natrium größer ist als 4 mol $H_2O$/mol Natrium beträgt.

Besonders bevorzugt werden Ionenaustauschermembranen bei der Elektrolyse d) eingesetzt, deren Wassertransport je mol Natrium 5,5 bis 6,5 mol $H_2O$/mol Natrium beträgt.

Zweckmäßigerweise wird die Elektrolyse d) im Falle der Anwendung einer Membranelektrolyse bei einer Stromdichte von 2 bis 6 $kA/m^2$ betrieben, wobei die zugrunde gelegte Fläche zur Berechnung der Stromdichte die Membranfläche ist.

Die Elektrolyse d) wird optimalerweise bei einer Temperatur von 70 bis 100°C, vorzugsweise bei 80 bis 95°C betrieben.

Die Elektrolyse d) wird insbesondere im Falle der Anwendung einer Membranelektrolyse bei einem Absolutdruck von 1,0 bis 1,4 bar, bevorzugt 1,1 bis 1,3 bar betrieben.

Im Falle der Anwendung einer Membranelektrolyse wird die Elektrolyse d) zweckmäßigerweise bei einem Differenzdruck zwischen Kathoden- und Anodenraum von 20 bis 150 mbar, vorzugsweise 30 bis 100 mbar betrieben.

Bevorzugt wird die Elektrolyse d) mit einer Anode betrieben, die als elektroaktive Beschichtung neben Rutheniumoxid auch weitere Edelmetallverbindungen der 7. und 8. Nebengruppe und/oder der 4. Hauptgruppe des Periodensystems der Elemente enthält.

Optimiert können in der Elektrolyse d) in den Elektrolysezellen Anoden mit größerer Oberfläche als die Oberfläche der Ionenaustauschermembranen eingesetzt werden.

Die Umsetzung b1) von Phosgen mit wenigstens einem Bisphenol in Gegenwart von Natronlauge und ggf. Aminkatalysator zu einem Polycarbonat ist grundsätzlich bekannt.

Polycarbonate im Sinne der vorliegenden Erfindung werden sowohl Homopolycarbonate als auch Copolycarbonate und/oder Polyestercarbonate vestanden; die Polycarbonate können in bekannter Weise linear oder verzweigt sein. Es können auch Mischungen von Polycarbonaten verwendet werden.

Die thermoplastischen Polycarbonate einschließlich der thermoplastischen, aromatischen Polyestercarbonate haben typischerweise ein mittleres Molekulargewicht $M_w$ (ermittelt durch Messung der relativen Viskosität bei 25°C in $CH_2Cl_2$ und einer Konzentration von 0,5 g pro 100 ml $CH_2Cl_2$) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (2)

HO-Z-OH (2),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3)

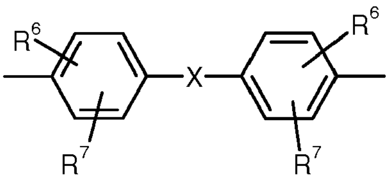

(3),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2-$
oder für einen Rest der Formel (3a)

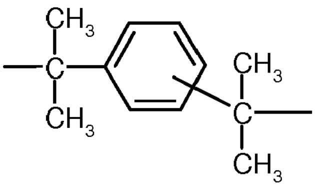

(3a).

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der Polycarbonate besonders geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel

zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl) -methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese besonderen vorgenannten Maßnahmen zur Herstellung der Polycarbonate sind dem Fachmann grundsätzlich geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Herstellungsweisen für Polycarbonate, einschließlich der Polyestercarbonate, sind das grundsätzlich bekannte Grenzflächenverfahren und das grundsätzlich bekannte Schmelzeumesterungsverfahren ( Varianten hierzu sind z. B. beschrieben in WO 2004/063249 A1, WO 2001/05866 A1, WO 2000/105867, US 5,340,905 A,).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

In einem bevorzugten neuen Verfahren werden als Bisphenol in Stufe b1) Dihydroxybiphenyle, Bis-(hydroxyphenyl)-alkane, Bis-(hydro-xyphenyl)-cycloalkane, Bis-(hydroxyphenyl)-sulfide, Bis-(hydroxyphenyl)-ether sowie deren kernalkylierte und kernhalogenierte, insbesondere 2,2-Bis-(4-hydroxy-phenyl)-propan (Bisphenol-A) und 1,1-Bis-(4-hydroxyphenyl)-3,3,5-trimethyl-cyclo-hexan (TMC-Bisphenol), besonders bevorzugt 2,2-Bis-(4-hydroxy-phenyl)-propan (Bisphenol-A) eingesetzt.

Die Umesterung und Umsetzung gemäß Schritt b2) zur Bildung von Polycarbonat ist grundsätzlich bekannt aus den Schriften: Encyclopedia of Polymer Science, Vol. 10 (1969), Chemistry and Physics of Polycarbonates, Polymer Reviews, H. Schnell, Vol. 9, John Wiley and Sons, Inc. (1964) .

Die Erfindung wird nachfolgend anhand der Figuren durch die Beispiele, welche jedoch keine Beschränkung der Erfindung darstellen, näher erläutert.

Die Figur 1 gibt eine schematische Darstellung des erfindungsgemäßen Verfahrens zur Aufreinigung des Prozesswassers aus Polycarbonatherstellung durch Vorreinigung durch Aktivkohle, Entfernung von Carbonat durch Strippung und Nanofiltration wieder.

Fig. 1

In der Figur haben die Bezugszeichen die nachstehende Bedeutung:

I Polycarbonatproduktion (Erzeugung von Prozesswasser)
II Vorreinigung des Prozesswassers mittels Aktivkohle

III Entfernung von Cabonat durch Strippung
IV Nanofiltration
V Solekreislauf der Chlor-Alkali-Elektrolyse
VI Optionale Konzentratreinigung durch Aktivkohle/Kationentauscher
VII Optionale Konzentratreinigung durch Ionentauscher
1 Prozesswasser aus Polycarbonatproduktion pH 12-14
2 Salzsäure zur Einstellung des pH-Wertes auf 7-8
3 Durch Aktivkohle vorgereinigtes Prozesswasser
4 Salzsäure zur Einstellung des pH-Wertes auf 2-4
5 Kohlendioxid aus der Strippkolonne
6 Vorgereinigtes und gestripptes Prozesswasser
7 Natronlauge zu Einstellung des pH-Wertes auf 6-8
8 Permeat aus Nanofiltration
9 Festes NaCl
10 Gereinigtes und konzentriertes Prozesswasser
11 Konzentrat aus Nanofiltration
12 Optional gereinigtes Konzentrat (Entfernung Organik)
13 Optional gereinigtes Konzentrat (Entfernung Anorganik)

## Beispiele

### Allgemeine Beschreibung der Aufarbeitung von Prozesswasser

Das Diphenylcarbonat (DPC)-Prozesswasser I mit einem TOC-Gehalt von ca. 20-100 mg/L, einer Konzentration von Ammoniumverbindungen und deren Salze von 0,5-5 mg/L, einem NaCl-Gehalt von 15 bis 20 Gew.- %, Carbonatgehalt bis zu 10 g/L und einem pH-Wert von 12-14 wird zunächst mittels HCl (2) auf einen pH-Wert kleiner 8 eingestellt und der Aktivkohlereinigung II zugeführt. Der entstehende Strom 3 hat eine Konzentration von Phenolen, Phenolderivaten und Bisphenol A von maximal 2 mg/L. Für die optionale Entfernung von Carbonat durch die Strippung III wird das Prozesswasser 3 durch HCl 4 auf den pH-Wert 2-4 eingestellt. Das gestrippte Prozesswasser 6 mit einer Carbonatkonzentration kleiner 50 mg/L wird mittels Natronlauge 7 auf den pH-Wert 5-8 eingestellt und der Nanofiltration IV zugeführt. In der Nanofiltration wird ein Aufkonzentrierungsfaktor so eingestellt, dass mindestens 50 Gew.-%, des in der vorgereinigten NaCl-Lösung vor der Nanofiltration enthaltenden Natriumchlorids (100 Gew.-%) im Permeat 8 erhalten werden. Die Konzentration von Ammoniumverbindungen und deren Salzen wird dabei um mind. 90% reduziert. Das gereinigte Permeat 8 kann mit festem NaCl 9 bis zur Sättigung (ca. 25 Gew.-%) aufgestockt werden (Strom 10) und dem Solekreislauf der Chlor-Alkali-Elektrolyse V zugeführt werden. Das mit Ammoniumverbindungen und deren Salzen sowie mehrwertigen Ionen angereicherte Konzentrat 11 kann verworfen werden. Optional kann Konzentrat 11 durch die zusätzliche Aktivkohlereinigung/Kationentauscher VI und Ionentauscher VII aufbereitet und ebenfalls dem Solekreislauf V zugeführt werden.

## Beispiel 1

Es wurden vier Lösungsansätze BV1-BV4 mit der Zusammensetzung wie in der Tabelle 1 ersichtlich hergestellt und der Anlage als Feedstrom zugeführt. Die Leitfähigkeit des Feeds betrug ca. 110 mS/cm. Die Testzelle wurde mit einer Nanofiltrationsmembran des Typs GE DK mit einer Fläche von ca. 130 $cm^2$ bestückt. Der Feed wurde mit einem Volumenstrom von 500 ml/min zugeführt. Es wurde ein konstanter Permeatstrom von 500 ml/h erzeugt. Die Druckentwicklung auf der Konzentratseite wurde registriert. Das Konzentrat wurde solange zurückgeführt, bis ca. eine volumetrische Aufkonzentrierung von 4 erreicht wurde. Das bedeutet beispielweise, dass von 100 L Feed 25 L Konzentrat und 75 L Permeat erzeugt werden.

Anschließend wurde das gesammelte Permeat und Konzentrat analysiert. Die Werte sind in Tabelle 1 dargestellt.

Tabelle 1

| | Komponenten | pH | Leitfähigkeit Konzentrat [mS/cm] | Leitfähigkeit Permeat [mS/cm] | Volumetrische Aufkonzentrierung | Versuchslaufzeit [h] | Druck [bar] | Monochlormethyl-Ethyl-Piperidiniumchlorid Rückhalt [%] |
|---|---|---|---|---|---|---|---|---|
| BV1 | 7 Gew.-% NaCl | 7 | 120 | 109 | 3,5 | 71 | 27 | |
| BV2 | 7 Gew.-% NaCl | 3 | 123 | 106 | 3,67 | 50,5 | 36 | |
| BV3 | 7 Gew.-% NaCl + 3,8 ppm Monochlormethyl-Ethyl-Piperidiniumchlorid | 7 | 121 | 109 | 4,1 | 74 | 29 | 94 |
| BV4 | 7 Gew.-% NaCl + 3,4 ppm Monochlormethyl-Ethyl-Piperidiniumchlorid | 3 | 126 | 109 | 3 | 51 | 36 | 94 |

Wie aus Tabelle 1 ersichtlich, konnte mit der Membran GE DK ein Rückhalt von Monochlormethyl-Ethyl-Piperidiniumchlorid von 94 % bei beiden pH-Werten 3 und 7 erreicht werden. Eine Verblockung der Membran wurde nicht beobachtet. Der erhöhte Betriebsdruck bei pH 3 ist auf die Eigenschaften der Membran zurückzuführen.

## Beispiel 2 (Vergleich; keine Vorreinigung mit Aktivkohle)

Es wurden drei Lösungsansätze BV5-BV7 mit der Zusammensetzung wie in der Tabelle 2 ersichtlich hergestellt und analog wie im Beispiel 1 beschrieben verfahren. Im Gegensatz zum Versuch in Beispiel 1 ist der Druck in der Versuchszelle kontinuierlich stark gestiegen, sodass kein stabiler Betrieb der Zelle möglich war. Der Versuch BV6 wurde vorzeitig abgebrochen, da nach 15 Stunden schon der maximal zulässiger Betriebsdruck der Membran von max. 41 bar erreicht wurde. Anschließend wurde das gesammelte Permeat und Konzentrat analysiert. Die Werte sind in Tabelle 2 dargestellt.

Tabelle 2

| | Komponenten | pH | Leitfähigkeit Konzentrat [mS/cm] | Leitfähigkeit Permeat [mS/cm] | Aufkonzentrierung | Versuchslaufzeit [h] | Druck [bar] |
|---|---|---|---|---|---|---|---|
| BV5 | 7% NaCl + 5 ppm Bisphenol A | 7 | 125 | 102 | 4,3 | 58 | 45 |
| BV6 | 7% NaCl + 5 ppm Bisphenol A | 3 | 132 | 100 | 4,7 | 15 | 55 |
| BV7 | 7% NaCl + 5 ppm Bisphenol A | 9 | 126 | 106 | 4,2 | 44 | 46 |

Wie aus dem Beispiel ersichtlich, führen bereits kleine Konzentrationen von Bisphenol A zu der Verblockung der Membran, sodass eine Vorreinigung des Prozesswassers beispielweise durch Aktivkohle erforderlich ist.

## Beispiel 3

Es wurde eine dotierte Lösung bestehend aus Natriumchlorid (130 mS/cm) und Ethylpiperidin (EPP) (20 mg/L) hergestellt und der Anlage als Feed mit einem Volumenstrom von 500 ml/min zugeführt. Es wurden drei verschiedene Nanofiltrationsmebranen, GE DK, NF 270 Dow Filmtec und TR 60 Ropur, bei pH-Werten von 3,2 und 6,8 getestet (mit einer Fläche von ca. 130 $cm^2$). Es wurde ein konstanter Permeatstrom von 500 ml/h erzeugt. Die Werte sind in der Tabelle 3 dargestellt.

Tabelle 3

| | Komponenten | Rückhalt NaCl [%] | Rückhalt EPP bei pH 3,2 [%] | Rückhalt EPP bei pH 6,8 [%] | Druck [bar] |
|---|---|---|---|---|---|
| BV8 | NF 270 Dow Filmtec | ~ 0 | 95 | 71 | 5 |
| BV9 | GE DK | 8 | 96 | 100 | 20 |
| BV10 | TR 60 | ~ 0 | 48 | 20 | 5 |

Wie aus der Tabelle 3 ersichtlich, unterscheidet sich die Rückhalt der Membranen teilweise stark in Abhängigkeit des pH-Wertes und Membraneigenschaften.

## Beispiel 4

Es wurde reales Prozesswasser (Reaktions- und Waschwasser zusammen) aus der Polycarbonatherstellung mit einer Leitfähigkeit von ca. 100 mS/cm und einem TOC-Wert von 40 mg/L auf den pH-Wert 7 mittels Salzsäure

eingestellt und der Anlage als Feed zugeführt. Die Konzentration von Monochlormethyl-Ethyl-Piperidiniumchlorid lag bei ca. 5 mg/l. Die Untersuchung erfolgte mit der GE-DK Membran im Kreislaufmodus (Permeat und Konzentrat wurden wieder zurückgeführt). Der Feeddruck betrug 40 bar. Es stellte sich zunächst ein Fluss von 29 L/($hm^2$) ein, der Rückhalt für NaCl und TOC wurde gemessen und betrug 31% bzw. 58%. Anschließend wurde eine volumetrische Aufkonzentrierung um den Faktor 4 durchgeführt. Das bedeutet, dass aus 2 L Feedlösung 1,5 L Permeat erzeugt wurde. Die Leitfähigkeit des Konzentrates stieg auf den Wert 131 mS/cm und der Fluss sank auf 15 L/($hm^2$) bei einem konstant bleibendem TOC-Rückhaltwert von ca. 56 %. Anschließend wurde eine Twister-Analytik (qualitative Spurenstoffanalytik) von Feed, Permeat und Konzentrat durchgeführt. Die Werte sind in der Tabelle 4 dargestellt. Eine quantitative Analyse war in der Salzlösung leider nicht möglich. Es werden daher qualitative Begriffe: viel, mittel, wenig zur Charakterisierung verwendet, die sich aus relativen Peakfläche von Gaschromatogrammen der Proben ergeben. Zusätzlich wurde der Monochlormethyl-Ethyl-Piperidiniumchlorid -Gehalt im Konzentrat und Permeat gemessen: Das Konzentrat enthielt 13,8 mg/L, das Permeat 0,2 mg/L.

Tabelle 4

| Komponente | Feed | Konzentrat | Permeat |
|---|---|---|---|
| Ethylpiperidin | mittel | viel | Spuren |
| Phenol | wenig | wenig | wenig |
| Bisphenol A | viel | viel | viel |
| Isopropylphenol | Spuren | Spuren | Spuren |
| Butylphenol | wenig | wenig | wenig |

Wie aus dem Beispiel ersichtlich, wurde die TOC Reduktion im Permeat nur durch Rückhaltung von Ethylpiperidin und Monochlormethyl-Ethyl-Piperidiniumchlorid erreicht. Andere Komponenten konnten die Membran ungehindert passieren. Der Rückhalt der Membran für NaCl stieg im Vergleich zu einer dotierten NaCl-Lösung von 8% auf 31%, was die Gesamtperformance negativ beeinflusst. Auch der Permeatfluss lag deutlich unter den Werten der dotierten Lösung obwohl bei höherem Druck gearbeitet wurde. Dies wird auf die Anwesenheit von Bisphenol A zurückgeführt (siehe Beispiel 2).

**Beispiel 5**

Es wurde reales Prozesswasser (Reaktions- und Waschwasser zusammen) aus der Polycarbonatherstellung nach Vorreinigung mittels Aktivkohle mit einer Leitfähigkeit von ca. 190 mS/cm und einem TOC-Wert von 3,1 mg/L mit pH 7 der Anlage als Feed zugeführt. Die Konzentration von Monochlormethyl-Ethyl-Piperidiniumchlorid im Feed lag bei ca. 0,7 mg/l. Die Untersuchung erfolgte mit der GE DK Membran. Der Feeddruck betrug 35 bar. Es wurde eine Aufkonzentrierung um den Faktor 4 durchgeführt. Das bedeutet, dass aus 2 L Feedlösung 1,5 L Permeat erzeugt wurde. Es stellte sich ein mittlerer Fluss von 35 L/($hm^2$) ein. Die Leitfähigkeit des Konzentrates stieg auf 200 mS/cm. Die Leitfähigkeit des Permeats lag im Mittel bei 185 mS/cm. Anschließend wurde der Monochlormethyl-Ethyl-Piperidiniumchlorid -Gehalt im Permeat gemessen und betrug 0,037 mg/L. Dies entspricht einer Rückhaltung von Monochlormethyl-Ethyl-Piperidiniumchlorid von ca. 95%. Negative Effekte wie Fluss-Reduktion oder Rückhalt-Verschlechterung wurden nicht beobachtet.

**Patentansprüche**

1. Integriertes Verfahren zur Aufbereitung von mindestens Katalysatorrest und/oder organische Verunreinigungen und Kochsalz enthaltendem Prozesswasser (1) aus der Produktion (I) von Polycarbonat, insbesondere von Diarylcarbonaten oder von Polycarbonat nach dem Lösungspolymerisationsverfahren und anschließende Verarbeitung des Prozesswassers (1) in einer nachgeschalteten Natriumchlorid-Elektrolyse (V), umfassend wenigstens die folgenden Schritte:

   a) Herstellung von Phosgen durch Umsetzung von Chlor mit Kohlenmonoxid,
   anschließend entweder
   b1) Umsetzung des gemäß Schritt a) gebildeten Phosgens mit wenigstens einem Bisphenol in Gegenwart von Natronlauge und ggf. Katalysator zu einem Polycarbonat als Zielprodukt und einer Natriumchlorid-haltigen

wässrigen Lösung,
oder
b2) Umesterung eines oder mehrerer Bisphenole mit einem oder mehreren Diarylcarbonaten zum Oligo- / Polycarbonat und dem Monophenol,
Isolierung bzw. Trennung des Polycarbonats und des Monophenols,
Umsetzung des Monophenols in Anwesenheit von Natronlauge und von Katalysator mit Phosgen aus Schritt a) und Trennung der Produkte wässrige Natriumchlorid-Lösung, Polycarbonat, als Zielprodukt, und Diarylcarbonat, wobei das Diarylcarbonat bevorzugt in der anfänglichen Umesterung wiedereingesetzt wird,
c) Abtrennung der in Schritt b1) oder b2) erhaltenen wässrigen Natriumchlorid-haltigen Lösung (Prozesswasser) (1) von Lösungsmittelresten und/oder ggf. Katalysatorresten, insbesondere durch Strippen der Lösung mit Wasserdampf, dann Einstellen der vorgereinigten Lösung auf einen pH-Wert kleiner oder gleich 8 und anschließende Reinigung (II) der vorgereinigten NaCl-Lösung mit Adsorbenzien, insbesondere mit Aktivkohle,
d) Elektrochemische Oxidation (V) wenigstens eines Teils der Natriumchlorid-haltigen Lösung erhalten aus Schritt c) unter Bildung von Chlor, Natronlauge und ggf. Wasserstoff,
e) wobei wenigstens ein Teil des gemäß Schritt d) hergestellten Chlors in die Herstellung von Phosgen gemäß Schritt a) zurückgeführt wird und/oder
f) optional wenigstens ein Teil der gemäß Schritt d) hergestellten Alkalilauge in die Herstellung von Polycarbonat gemäß Schritt b1) zurückgeführt wird,
**dadurch gekennzeichnet, dass** im Anschluss an die Reinigung (II) der Natriumchlorid-haltigen Lösung mit Adsorbenzien in Schritt c) die gereinigte NaCl-haltige Lösung in einem zusätzlichen Schritt c1) einer Nanofiltration (IV) unterzogen wird, wobei die NaCl-haltige Lösung in eine hochgereinigte NaCl-Lösung (8) als Permeat und ein NaCl-haltiges Konzentrat (11) mit organischen und anorganischen Verunreinigungen aufgetrennt wird, die hochgereinigte NaCl-Lösung der elektrochemischen Oxidation d) (V) zugeführt und das Konzentrat (11) wahlweise aufgearbeitet oder verworfen wird.

**2.** Verfahren gemäß Anspruch 1, **dadurch gekennzeichnet, dass** die elektrochemische Oxidation d) (V) wenigstens eines Teiles der aus der Nanofiltration c1) (IV) erhaltenen hochgereinigten Natriumchlorid-haltigen Lösung (8) zu Chlor und Natronlauge in einer Membranelektrolyse unter Einsatz einer Sauerstoffverzehrelektrode als Kathode erfolgt.

**3.** Verfahren gemäß Anspruch 1 oder 2, **dadurch gekennzeichnet, dass** die Nanofiltration c1) (IV) bei einer Temperatur von 10°C bis 45°C, bevorzugt von 20°C bis 45°C, besonders bevorzugt von 20°C bis 35°C durchgeführt wird.

**4.** Verfahren gemäß einem der Ansprüche 1 bis 3, **dadurch gekennzeichnet, dass** die Nanofiltration c1) (IV) an einer Nanofiltrationsmembran mit einer Trenngrenze (MWCO) von 150-300 Da, bevorzugt von 180 bis 220 Da durchgeführt wird.

**5.** Verfahren gemäß einem der Ansprüche 1 bis 4, **dadurch gekennzeichnet, dass** die Nanofiltration c1) (IV) an einer Nanofiltrationsmembran mit einer Trennschicht auf Basis von Piperazinamid durchgeführt wird.

**6.** Verfahren gemäß einem der Ansprüche 1 bis 5, **dadurch gekennzeichnet, dass** die Nanofiltration c1) (IV) mit einer vorgereinigten wässrigen NaCl-Lösung durchgeführt wird, die eine NaCl-Konzentration im Bereich von 4 bis 20 Gew.-%, bevorzugt von 7 bis 20 Gew.-% aufweist.

**7.** Verfahren gemäß einem der Ansprüche 1 bis 6, **dadurch gekennzeichnet, dass** die Nanofiltration c1) (IV) bei einem Druck von 5 bis 50 bar, bevorzugt von 15 bis 45 bar durchgeführt wird.

**8.** Verfahren gemäß ein der Ansprüche 1-7, **dadurch gekennzeichnet, dass** der Rückhalt der Nanofiltrations-Membran für Ammoniumverbindungen und deren Salze unabhängig von einander jeweils mindestens 70%, bevorzugt mindestens 90% beträgt.

**9.** Verfahren gemäß einem der Ansprüche 1-8, **dadurch gekennzeichnet, dass** bei der Nanofiltration c1) (IV) mindestens 50 %, bevorzugt mindestens 70 % des in der vorgereinigten NaCl-Lösung vor der Nanofiltration c1) (IV) enthaltenden Natriumchlorids im Permeat (8) erhalten werden.

**10.** Verfahren gemäß einem der Ansprüche 1 bis 9, **dadurch gekennzeichnet, dass** die für die Nanofiltration c1) (IV) verwendete Membran einen Rückhalt von Natriumchlorid von höchstens 10 %, bevorzugt höchstens 5 % aufweist.

**11.** Verfahren gemäß einem der Ansprüche 1 bis 10, **dadurch gekennzeichnet, dass** die Natriumchlorid-haltige Lösung (1) bei der Reinigung c) vor der Adsorption (II) auf einen pH-Wert von höchstens 8 eingestellt, insbesondere durch Einsatz von Salzsäure oder Chlorwasserstoff.

**12.** Verfahren gemäß einem der Ansprüche 1 bis 11, **dadurch gekennzeichnet, dass** der Permeatfluss durch die Membran bei der Nanofiltration (IV) von 15 bis 40 $L/(hm^2)$ beträgt.

**13.** Verfahren gemäß einem der Ansprüche 1 bis 12, **dadurch gekennzeichnet, dass** die hochgereinigte Natriumchlorid-haltige Lösung erhalten aus Schritt c1) vor der Elektrolyse d) (V), insbesondere einer Elektrolyse mittels Membran-Elektrolyseverfahren, auf eine NaCl-Konzentration von mindestens 23 Gew.-%, bevorzugt mindestens 25 Gew.-% gebracht wird.

**14.** Verfahren nach einem der Ansprüche 1 bis 13, **dadurch gekennzeichnet, dass** Bisphenole in der Polycarbonatproduktion (I) Dihydroxyarylverbindungen der Formel (2)

$$HO-Z-OH \qquad (2)$$

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann, in der Reaktion b) eingesetzt werden.

**15.** Verfahren gemäß einem der Ansprüche 1 bis 14, **dadurch gekennzeichnet, dass** als Bisphenol in Stufe b), insbesondere Stufe b1) Dihydroxybiphenyle, Bis-(hydroxyphenyl)-alkane, Bis-(hydro-xyphenyl)-cycloalkane, Bis-(hydroxyphenyl)-sulfide, Bis-(hydroxyphenyl)-ether sowie deren kernalkylierte und kernhalogenierte, insbesondere 2,2-Bis-(4-hydroxy-phenyl)-propan (Bisphenol-A) und 1,1-Bis-(4-hydroxyphenyl)-3,3,5-trimethyl-cyclo-hexan (TMC-Bisphenol), besonders bevorzugt 2,2-Bis-(4-hydroxy-phenyl)-propan (Bisphenol-A) eingesetzt wird.

**16.** Verfahren nach einem der Ansprüche 1 bis 15 , **dadurch gekennzeichnet, dass** das bei der Nanofiltration c1) erhaltene Konzentrat (11), das Natriumchlorid Lösung und Katalysatorreste enthält, einer Aufarbeitung g) zugeführt wird, in der an einem Kationenaustauscherharz ionische und nichtionische Katalysatorreste von der konzentrierten Natriumchloridlösung abgetrennt werden und/oder das Konzentrat aus c1) mittels Aktivkohle gereinigt wird, und optional das gereinigte Konzentrat der Wiederverwendung für die elektrochemische Oxidation d) (V)d) zugeführt werden.

**17.** Verfahren nach einem der Ansprüche 1 bis 16, **dadurch gekennzeichnet, dass** in Schritt c) und/oder in Schritt g) als Aktivkohle für die Adsorption (II) Aktivkohle auf der Basis von pyrolysierten Kokosnussschalen verwendet wird, insbesondere solche Aktivkohle, welche zusätzlich eine saure und anschließend eine alkalische Wäsche zur Entfernung anorganischer Bestandteile aus der Aktivkohle durchlaufen haben.

**18.** Verfahren gemäß Anspruch 16 und 17, **dadurch gekennzeichnet, dass** die in Schritt g) erhaltene gereinigte konzentrierte Natriumchloridlösung zusätzlich in der elektrochemischen Oxidation d) (V) umgesetzt wird.

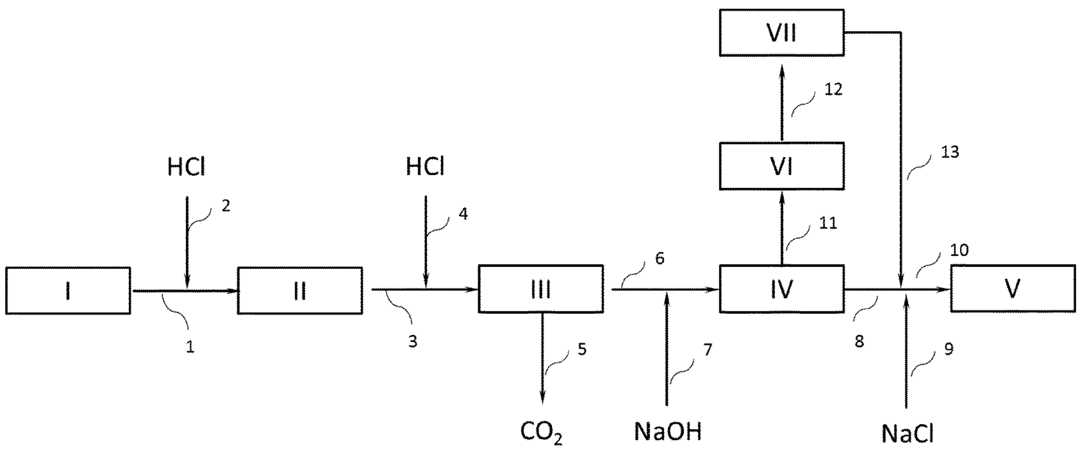


Fig. 1

Europäisches Patentamt
European Patent Office
Office européen des brevets

# EUROPÄISCHER RECHERCHENBERICHT

Nummer der Anmeldung
EP 19 16 2515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2011/009592 A1 (OOMS PIETER [DE] ET AL) 13. Januar 2011 (2011-01-13)<br>* das ganze Dokument *<br>----- | 1-18 | INV.<br>C25B1/46<br>C25B15/08<br>C08G64/24<br>C08G64/30<br>C01D3/14<br>B01D61/02 |
| A | US 2011/147229 A1 (OOMS PIETER [DE] ET AL) 23. Juni 2011 (2011-06-23)<br>* das ganze Dokument *<br>----- | 1-18 | |
| A | WO 2014/161867 A1 (SOLVAY [BE]) 9. Oktober 2014 (2014-10-09)<br>* Ansprüche 1, 5, 7, 10 *<br>----- | 1-18 | |
| A | NILSSON ET AL: "The influence of pH, salt and temperature on nanofiltration performance",<br>JOURNAL OF MEMBRANE SCIENCE, ELSEVIER BV, NL,<br>Bd. 312, Nr. 1-2,<br>4. Januar 2008 (2008-01-04), Seiten 97-106, XP022500571,<br>ISSN: 0376-7388, DOI: 10.1016/J.MEMSCI.2007.12.059<br>* Zusammenfassung, Einleitung *<br>----- | 1-18 | RECHERCHIERTE SACHGEBIETE (IPC)<br>C25B<br>C08G<br>C01D |
| A | CN 101 597 306 A (UNIV WUHAN [CN]) 9. Dezember 2009 (2009-12-09)<br>* Zusammenfassung; Absatz 2 der "Background technology" *<br>----- | 1-18 | |

Der vorliegende Recherchenbericht wurde für alle Patentansprüche erstellt

1

| Recherchenort | Abschlußdatum der Recherche | Prüfer |
|---|---|---|
| München | 4. September 2019 | Ritter, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 16 2515

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2019

| Im Recherchenbericht angeführtes Patentdokument | Datum der Veröffentlichung | Mitglied(er) der Patentfamilie | Datum der Veröffentlichung |
|---|---|---|---|
| US 2011009592 A1 | 13-01-2011 | CN 101942080 A | 12-01-2011 |
| | | DE 102009032020 A1 | 13-01-2011 |
| | | EP 2272890 A1 | 12-01-2011 |
| | | JP 2011017001 A | 27-01-2011 |
| | | KR 20110004312 A | 13-01-2011 |
| | | RU 2010127739 A | 20-01-2012 |
| | | TW 201127874 A | 16-08-2011 |
| | | US 2011009592 A1 | 13-01-2011 |
| US 2011147229 A1 | 23-06-2011 | AT 525328 T | 15-10-2011 |
| | | CN 101888971 A | 17-11-2010 |
| | | DE 102007058701 A1 | 10-06-2009 |
| | | EP 2229343 A1 | 22-09-2010 |
| | | ES 2373196 T3 | 01-02-2012 |
| | | JP 5508278 B2 | 28-05-2014 |
| | | JP 2011506278 A | 03-03-2011 |
| | | KR 20100106331 A | 01-10-2010 |
| | | RU 2010127421 A | 20-01-2012 |
| | | TW 200938525 A | 16-09-2009 |
| | | US 2009173636 A1 | 09-07-2009 |
| | | US 2011147229 A1 | 23-06-2011 |
| | | WO 2009071211 A1 | 11-06-2009 |
| WO 2014161867 A1 | 09-10-2014 | KEINE | |
| CN 101597306 A | 09-12-2009 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2229343 A1
- WO 2017001513 A1
- WO 2015168339 A1
- US 6214235 B1
- US 6340736 B1
- DE 102007004164 A1
- WO 2014008593 A
- EP 1858806 B1
- WO 2004063249 A1
- WO 200105866 A1
- WO 2000105867 A
- US 5340905 A


### In der Beschreibung aufgeführte Nicht-Patentliteratur


- *Separation and Purification Technology,* 2008, vol. 63, 251-263
- *Water Research,* Dezember 2006, vol. 40 (20), 3793-3799
- **R. RAUTENBACH et al.** Membrane Processes. John Wiley & Sons Ltd, 1989
- Schriften: Encyclopedia of Polymer Science. 1969, vol. 10
- **H. SCHNELL.** Chemistry and Physics of Polycarbonates, Polymer Reviews. John Wiley and Sons, Inc, 1964, vol. 9